# EUROPEAN PATENT APPLICATION

(11) **EP 4 779 943 A1**
(43) Date of publication of application: **22.07.2026**
(21) Application number: 25152268.6
(22) Date of filing: 16.01.2025
(51) Int. Cl.: H04L 41/0869, H04L 41/08, H04L 41/344

(54) **METHOD FOR MANAGING EDGE DEVICES**

(71) Applicant: Innomotics GmbH, 90441 Nürnberg (DE)
(72) Inventor: Heinisch, Alexander, 2124 Kreuzstetten (AT); Möbius, Sebastian, 90455 Nürnberg (DE); Rabener, Lukas, 90552 Röthenbach a.d.Pegnitz (DE); Mygapula, Sudheer Kumar, 91054 Erlangen (DE); Haimerl, Mathias, 91058 Erlangen (DE); Krüger, Sebastian, 91058 Erlangen/Eltersdorf (DE)
(74) Representative: Michalski Hüttermann & Partner mbB

(57) **Abstract**

The invention relates to a method for managing at least a first edge device (1), wherein the method comprises the following steps:
- Gathering process data (3) by the edge device (1), wherein the process data (3) is provided by at least a first asset (2) connected to the edge device (1);
- Determining an actual state (4) of the edge device (1) and/or the asset (2) by the edge device (1), wherein the actual state (4) comprises information on an actual version and/or an actual configuration of at least one of the following, which is deployed on the edge device (1) and/or the asset (2): a firmware and/or an operating system and/or a software;
- Sending the process data (3) and the actual state (4) via a first unidirectional channel (6) by the edge device (1) to a processing system (8);
- Using the actual state (4) in an edge management unit (10), comprised by the processing system (8).

## Description

The edge is a fundamental enabler for cyber physical systems like smart grids, smart buildings/factories and for the IT/OT convergence needed to provide faster, more reliable, cheaper, and more sustainable operation to produce goods, automate, control, and operate assets. By this, it is a crucial part of such systems to keep them and their periphery up to date with respect to security, to changes of requirements as well as to evolution of technology.

Typically, this is done by either of the following device management solutions:
Option 1: Devices are online (or at least temporarily online) to be managed from an edge management backend hosted in the cloud (e.g. EDS/building-X).
Option 2: Devices are managed on premises by deploying the edge management backend on site, either companywide or at the shop floor level. (e.g. Industrial Edge). All devices to be managed can access the edge management backend if they need to update.
Option 3: Devices are in a disconnected or air gapped environment and management of software is done manually on the device itself, optionally supported by some tooling.
Option 4: Non managed devices, however that is typically not an option.

In some scenarios internet accessibility is prohibited, which renders option 1 as a non-option. Further, in some scenarios single devices are offshore or in locations not within the security boundary of a shop floor or company intranet. That means, the device management must be deployed near the device to be managed which renders option 2 as 1:1 relation between device and management, which by does not scale. For option 3, it does not matter where the device is located if there is either physical access or local connectivity to it. Unfortunately, option 3 only allows manual management of such devices, and the reporting of the current device deployment status (including configuration drifts) can be done only manually and must be synchronized to the backend manually.

The problem is that there is no general solution supporting connectivity options 1-3 to update software on the device, track the status of the deployment and configuration on the device, detect possible drifts to it in the most automated way possible for the connectivity constraints applied.

Either of the solutions described above solves a subset of the problems described, but no solution currently available supports all the three connectivity types providing an automated transition between them offering additional features to the operator, reducing manual steps to be done to a minimum.

Either the devices are online (Internet for cloud based or customer network for on-premises hosted management backends) or at least online for some maintenance window, or the device management is done completely manually, e.g. by copying files.

The invention solves the problems described above by providing a secure and reliable method of managing edge devices, especially in critical environments such as power plants, oil and gas industries, refineries, oil rigs, mining operations, or production facilities for cement or hydrogen.

The object of the invention is achieved by the independent claims. The dependent claims describe advantageous developments and modifications of the invention.

In accordance with the invention there is provided a method for managing at least a first edge device, wherein the method comprises the following steps:
- Gathering process data by the edge device, wherein the process data is provided by at least a first asset connected to the edge device;
- Determining an actual state of the edge device and/or the asset by the edge device, wherein the actual state comprises information on an actual version and/or an actual configuration of at least one of the following, which is deployed on the edge device and/or the asset: a firmware and/or an operating system and/or a software;
- Sending the process data and the actual state via a first unidirectional channel by the edge device to a processing system;
- Using the actual state in an edge management unit, comprised by the processing system.

The method solves the problem in a secure and reliable way. By using this method, a first unidirectional channel is used for multiple purposes. Not only is it used to send process data but also the actual state of the edge device and/or the asset. Therefore, an established channel is used for managing the edge device.

In contrast to the currently existing solutions - targeting device management either fully automated in an online /on-premises scenario, or completely manual in a disconnected scenario - the method takes an approach of using the data pane (data connection) respectively the first unidirectional channel to also forward and ingest device management information to a device management system otherwise completely unaware of the state of the device if operated in a disconnected environment.

The major advantage of the method is that, by considering the first unidirectional channel as a fallback if no direct device connectivity is possible, the method provides full observability of the software stacks (firmware, operating system, software, applications) and configurations deployed on the edge device, even in disconnected scenarios. Even if in such scenarios an automated workflow can only be done in a reduced way, the method provides support for update and device management in the best possible way possible under given constraints.

The process data can be any data related to processes that the assets are part of. This process data can be for example measuring data, physical values, KPIs, quantities of goods, process output, process input.

The assets can be for example computing units, loT devices, control units, sensors, machines, motors, pumps, PLCs or FPGAs.

The process data can be further used in a processing system, in particular in a backend unit, to provide services such as data analytics, predictive maintenance, a simulation, a digital twin and/or a service center.

The processing system can be a distributed system or a concentrated system. The processing system can comprise a backend unit and an edge management unit. The processing system can be situated on-premises or in a cloud environment.

A firmware is software that provides low-level control of an edge device or an asset. For a relatively simple device, firmware may perform all control, monitoring and data manipulation functionality. For a more complex device, firmware may provide relatively low-level control as well as hardware abstraction services to higher-level software such as an operating system.

An operating system is system software that manages computer hardware and software resources, and provides common services for computer programs.

A software in the context of the invention is any program or computer program installed or deployed on the edge device or asset. In particular, applications or apps installed or deployed on edge devices or assets or comprised by the meaning of software.

A drift is a difference between an actual state and a desired state. A drift emerges through a change in the actual state or in the desired state.

Advantageous configurations and embodiments of the method according to the invention follow from the claims dependent on claim 1 as well as the following description.

It is beneficial when the processing system comprises a backend unit and the method further comprises the following step: Forwarding the actual state by the processing system from the backend unit to an edge management unit. This way, a backend unit can be used for receiving the process data and the actual state via an established first unidirectional channel.

It is beneficial when the processing system or the backend unit processes the process data. This way, an efficient communication and use of resources is ensured. Further, services can be provided based on the process data.

It is beneficial when the processing system or the backend unit provides services based on the process data, in particular data analytics, predictive maintenance, a simulation, a digital twin and/or a service center. This way, an added value is created using the process data.

It is beneficial when the method further comprises the following step: Determining a drift of the actual state and/or a desired state by comparing the actual state to the desired state of the edge device and/or the asset, wherein the desired state comprises information on a desired version and/or a desired configuration of at least one of the following, which is to be deployed on the edge device and/or the asset: a firmware and/or an operating system and/or a software. A drift is a discrepancy between the actual state and the desired state. By determining the drift, it is possible to detect whether a change of the actual state or the desired state has occurred. A change in the actual state can result from a local change, for example on-site, to the edge device or the asset. For example, an operator might change the configuration of the software of the edge device on-site. A change in the desired state can result from an input to the processing system or the edge management unit whereby a configurator might for example change, which software version should be deployed on the edge device. The information about the drift can further be used to reconcile the actual state and the desired state, for example to change the desired state to the actual state after a confirmation by the operator. Further, a drift caused by a change of the desired state can trigger an update to the actual state via the second channel. This leads to a high degree of automation and robustness of the method.

It is beneficial when the method further comprises the step of determining whether the drift results from a change in the actual state or the desired state. This can be implemented for example using a vector clock. The effect of this step is that it enables the processing system or the edge management unit to further process the drift and derive appropriate measures. For example, when the drift results from a change in the actual state, a configurator might be notified - for example via a web UI, email or messaging service - and the desired state might be changed to the actual state after a confirmation by the configurator. Certain changes in the actual state might also automatically lead to a change in the desired state. A change in the desired state can trigger an update to the actual state via the second channel. This leads to a high degree of automation and robustness of the method.

It is beneficial when the method further comprises the step of determining in which of the following a change occurs and therefore the drift results from: a firmware and/or an operating system and/or a software. This step enables the method for example to only change the desired state to the actual state after a change in the actual state when the change or the drift results from a certain source, either a firmware and/or an operating system and/or a software. For example, only when a drift results from a change in the software of the edge device, the desired state might be replaced by the actual state automatically. It this example, other sources of drifts might need a confirmation by an operator. This leads to a high degree of automation and robustness of the method.

It is beneficial when, in case the drift results from a change in the desired state, the drift is resolved by performing the following step: Updating the edge device and/or the asset to the desired state via a second channel and/or notifying a user. This has the effect that a when a second channel is established, the edge device and/or the asset can be updated. A second channel can also be established by an operator on-site updating the edge device and/or the asset locally. Further, when a second channel is not established, the drift is at least known to the processing unit or the edge management unit and the processing unit or the edge management unit knows that an update needs to be conducted. This leads to a high degree of automation and robustness of the method.

It is beneficial when updating the edge device and/or the asset is performed by sending
- the desired state and/or
- a desired version and/or a desired configuration of one of the following to the edge device and/or the asset: a firmware and/or an operating system and/or a software.

In the first case, where only a desired state is sent to the edge device and/or the asset, the transmitted data is kept minimal leading to an efficient communication. In this case, the edge device and/or the asset conducts the update using local resources. In the second case, where a desired version and/or configuration is sent to the edge device and/or the asset, local resources are not needed, ensuring a proper update.

It is beneficial when, in case the drift results from a change in the actual state, the drift is resolved by performing the following step: Updating the desired state to match the actual state and/or notifying a user. This has the effect that the edge management unit has at any time knowledge of the state of the edge device and/or the asset. Further, this leads to a high degree of automation and robustness of the method.

It is beneficial when the edge management unit and the backend unit are situated in a cloud environment. This allows for an efficient management of multiple edge devices by a single edge management unit.

It is beneficial when the edge management unit and the backend unit are situated on-premises. This leads to a high degree of security for critical environments such as power plants, oil and gas industries, refineries, oil rigs, mining operations, or production facilities for cement or hydrogen.

It is beneficial when the first unidirectional channel comprises a data diode. A data diode provides physical certainty that the first channel is unidirectional. This leads to a high degree of security for critical environments such as power plants, oil and gas industries, refineries, oil rigs, mining operations, or production facilities for cement or hydrogen.

It is beneficial when the first unidirectional channel comprises an sFTP server. An sFTP server provides certainty that the first channel is unidirectional. This leads to a high degree of security for critical environments such as power plants, oil and gas industries, refineries, oil rigs, mining operations, or production facilities for cement or hydrogen.

The problem is also solved by a system for managing edge devices comprising means to carry out the method according to any of the preceding claims, further comprising:
- At least a first asset for providing process data, wherein the asset is connected to an edge device;
- An edge device for:
   i. Gathering process data;
   ii. Determining an actual state of the edge device and/or the asset, wherein the actual state comprises information on an actual version and/or an actual configuration of at least one of the following, which is deployed on the edge device and/or the asset: a firmware and/or an operating system and/or a software; and
   iii. Sending the process data and the actual state via a first unidirectional channel by the edge device to a processing system; and
- An edge management unit comprised by the processing system for using the actual state.

Embodiments of the invention are now described, by way of example only, with reference to the accompanying drawings, of which:

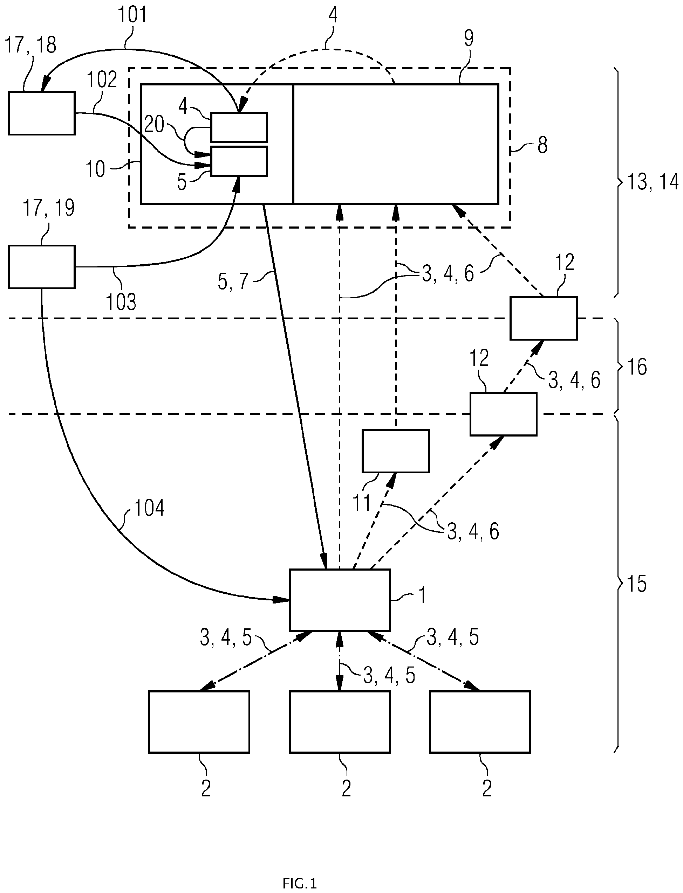

Figure 1 shows an exemplary embodiment of the method according to the invention.
Fig. 1 shows a first edge device 1. In this case, multiple assets 2 are connected to the edge device 2. The assets 2 provide process data 3 to the edge device 1. The process data 3 is gathered by the edge device 1. In this case, the assets 2 also provide their actual state 4 to the edge device 1. The actual state 4 of the assets 2 is also gathered by the edge device 1. The edge device 1 and the assets 2 are located on-site 15. The site can be for example a factory, a power plant, a mining operation, a hydrogen or cement production facility, or an oil or gas extraction or production facility. In other embodiments comprised by the invention, multiple edge devices 1 are located on-site 15.

The actual state 4 of the edge device 1 and/or the asset 2 comprises information on an actual version and/or an actual configuration of at least one of the following, which is deployed on the edge device 1 and/or the asset 2: a firmware and/or an operating system and/or a software. For example, the actual state 4 comprises information on an actual firmware version of the edge device 1 or an actual software configuration of the asset 2 or any other or multiple other permutations of:
- Actual version or actual configuration of a
- Firmware, operating system or software of an
- Edge device or asset.

The edge device 1 is connected via a first unidirectional channel 6 to a processing system 8. The processing system 8 can be situated in a cloud environment 13 or on-premises 14. The first unidirectional channel 6 may be a direct connection to the processing system 8. The first unidirectional channel 6 may also comprise a data diode 11 or at least one File Transfer Protocol (FTP) or Secure File Transfer Protocol (sFTP) server 12. These measures ensure the unidirectionality of the first unidirectional channel. In this case, the network environment on-site 15 is separated from the network environment on-premises 14 or of the cloud environment 13 by at least one demilitarized zone (DMZ) 16.

The process data 2 and the actual state 4 of the edge device 1 and/or the asset 2 is sent by the edge device 1 via the first unidirectional channel 6 to the processing system 8. In this example, the processing system 8 comprises a backend unit 9 and an edge management unit 10. The backend unit 9 forwards the actual state 4 to the edge management unit 9. In other words, all status information needed for device, app and configuration management is reported either directly or indirectly (sftp, data diode, ...) to the data ingestion backend in the same way as the data itself (e.g., in case of sFTP as a file). There a service observes said report and forwards it to the edge management platform via API calls, updating the status of the edge device. If, in rare cases, it is not allowed to download and manual upload such report by the Operator could be used as a workaround.

The processing unit 8 or the edge management unit 10 manages a desired state 5. This includes saving a desired state 5 in a memory. The desired state 5 comprises information on a desired version and/or a desired configuration of at least one of the following, which is to be deployed on the edge device 1 and/or the asset 2: a firmware and/or an operating system and/or a software. For example, the desired state 5 comprises information on a desired firmware version of the edge device 1 or a desired software configuration of the asset 2 or any other or multiple other permutations of:
- Desired version or desired configuration of a
- Firmware, operating system or software of an
- Edge device or asset.

In this example, the desired state 5 is defined by a user 17 or an operator 18. The user 17 or the operator 18 may change for example a desired software configuration of the edge device 1. In the meaning of the invention, the configurator 18 is a person that configures the desired state 5. The desired state 5 may also be defined automatically.

When the status update respectively the actual state 4 arrives at the processing unit 8 the processing unit 8 or in this case the edge management unit 10 tries to reconcile it with the desired state 4 of the system. If there is a drift detected the user 17 or the configurator 18 is notified with a notification 101 that the managed edge device 1 or asset 2 does not match the desired state 5. In other words, the processing unit 8 or the edge management unit 10 detects whether there is a drift between the actual state 4 and the desired state 5.

This can have several reasons: A new deployment respectively a new desired state 5 was created by the configurator 18 but did not get applied. Either it was not even downloaded, or it was not installed on the device. Both states are known at any time for any edge deployment.

Alternatively, there was a local change to the actual state 4 on the edge device 1 or asset 2 itself. That means a local change to the actual state 4 was applied which must be reconciled with the desired state 5. Two viable solutions can then be applied. a) Automatically apply changes to desired state 5 / automatic change 20 of deployment/configuration or b) a user gets notified about the drift and manual reconciliation must be done by manually changing the deployment/configuration. It can be defined which changes in the actual state 4 lead to an automatic change in the desired state 5. For example, only changes in the configuration of the software of the edge device might lead to a change in the desired state 5.

After the deployment/configuration respectively the desired state 5 was changed - either by a user 17 (due to drift correction or planned system update/reconfiguration) or by an auto reconciler 20 - it can either be downloaded and applied automatically via a second channel 7 if the edge device 1 has connection to the processing unit 8 or the edge management unit 10 (online/on-premises scenario) or it can be applied manually by downloading it and applying it via a local provided Web III 104.

Besides the download from upstream vs. the upload from a predownloaded file the update process on the file does not differ from that point onwards. After the new update package has been applied all status information respectively is again uploaded periodically to the backend. To support a smooth commissioning also local configuration changes are supported (e.g., IP settings, proxy-settings, firewall rules ...) to not always have to repeat the whole management cycle. Since such changes are always forwarded to the backend via the deployment status report they are as well detected as a drift and can be reconciled automatically (or manually dependent on customer settings) as described above.

### List of References

- 1: Edge device
- 2: Asset
- 3: Process data
- 4: Actual state
- 5: Desired state
- 6: First unidirectional channel
- 7: Second channel
- 8: Processing system
- 9: Backend unit
- 10: Edge management unit
- 11: Data diode
- 12: sFTP server
- 13: Cloud environment
- 14: On-premises
- 15: On-site
- 16: DMZ
- 17: User
- 18: Configurator
- 19: Operator
- 20: Auto-reconciler

## Claims

1. Method for managing at least a first edge device (1), wherein the method comprises the following steps:
- Gathering process data (3) by the edge device (1), wherein the process data (3) is provided by at least a first asset (2) connected to the edge device (1);
- Determining an actual state (4) of the edge device (1) and/or the asset (2) by the edge device (1), wherein the actual state (4) comprises information on an actual version and/or an actual configuration of at least one of the following, which is deployed on the edge device (1) and/or the asset (2): a firmware and/or an operating system and/or a software;
- Sending the process data (3) and the actual state (4) via a first unidirectional channel (6) by the edge device (1) to a processing system (8);
- Using the actual state (4) in an edge management unit (10), comprised by the processing system (8).

2. Method according to claim 1, wherein the processing system (8) comprises a backend unit (9) and the method further comprises the following step:
- Forwarding the actual state (4) by the processing system (8) from the backend unit (9) to an edge management unit (10).

3. Method according to any of the preceding claims, wherein the processing system (8) or the backend unit (9) processes the process data (3).

4. Method according to claim 3, wherein the processing system (8) or the backend unit (9) provides services based on the process data (3), in particular data analytics, predictive maintenance, a simulation, a digital twin and/or a service center.

5. Method according to any of the preceding claims, further comprising the following step:
- Determining a drift of the actual state (4) and/or a desired state (5) by comparing the actual state (4) to the desired state (5) of the edge device (1) and/or the asset (2), wherein the desired state (5) comprises information on a desired version and/or a desired configuration of at least one of the following, which is to be deployed on the edge device and/or the asset: a firmware and/or an operating system and/or a software.

6. Method according to claim 5, further comprising the step of determining whether the drift results from a change in the actual state (4) or the desired state (5).

7. Method according to any of the claims 5 or 6, further comprising the step of determining in which of the following a change occurs and therefore the drift results from: a firmware and/or an operating system and/or a software.

8. Method according to any of the claims 6 or 7, wherein in case the drift results from a change in the desired state (5), the drift is resolved by performing the following step:
- Updating the edge device (1) and/or the asset (2) to the desired state (5) via a second channel (6) and/or notifying a user (17, 18).

9. Method according to claim 8, wherein updating the edge device (1) and/or the asset (2) is performed by sending
- the desired state and/or
- a desired version and/or a desired configuration of one of the following to the edge device (1) and/or the asset (2): a firmware and/or an operating system and/or a software.

10. Method according to any of the claims 6 to 9, wherein in case the drift results from a change in the actual state (4), the drift is resolved by performing the following step:
- Updating the desired state (5) to match the actual state (4) and/or notifying a user (17, 18).

11. Method according to any of the preceding claims, wherein the edge management unit (10) and the backend unit (9) are situated in a cloud environment (13).

12. Method according to any of the claims 1 to 10, wherein the edge management unit (10) and the backend unit (9) are situated on-premises (14).

13. Method according to any of the preceding claims, wherein the first unidirectional channel (6) comprises a data diode (11).

14. Method according to any of the preceding claims, wherein the first unidirectional channel (6) comprises an sFTP server (12).

15. System for managing at least a first edge device (1) comprising means to carry out the method according to any of the preceding claims, further comprising:
- At least a first asset (2) for providing process data (3), wherein the asset (2) is connected to an edge device (1);
- The edge device (1) for:
i. Gathering process data (3);
ii. Determining an actual state (4) of the edge device (1) and/or the asset (2), wherein the actual state (4) comprises information on an actual version and/or an actual configuration of at least one of the following, which is deployed on the edge device (1) and/or the asset (2): a firmware and/or an operating system and/or a software; and
iii. Sending the process data (3) and the actual state (4) via a first unidirectional channel (6) by the edge device (1) to a processing system (8); and
- An edge management unit (10) comprised by the processing system (8) for using the actual state (4).
